# EUROPEAN PATENT APPLICATION

(11) **EP 1 422 284 A2**
(43) Date of publication of application: **26.05.2004**
(21) Application number: 03256979.0
(22) Date of filing: 05.11.2003
(51) Int. Cl.: C10L 1/00, C10L 1/22, C10M 171/00, C10M 133/22

(54) **Method for marking hydrocarbons with anthraquinone imines**

(30) Priority: 22.11.2002 US 428412 P
(71) Applicant: ROHM AND HAAS COMPANY, Philadelphia, Pennsylvania 19106-2399 (US)
(72) Inventor: Ho, Kim Sang, Richboro Pennsylvania 18954 (US); Stephens, Randall Wayne, Perkasie Pennsylvania 18944 (US)
(74) Representative: Kent, Venetia Katherine

(57) **Abstract**

A method for invisibly marking a liquid petroleum hydrocarbon. The method comprises adding to the liquid petroleum hydrocarbon at least one dye having formula (I) 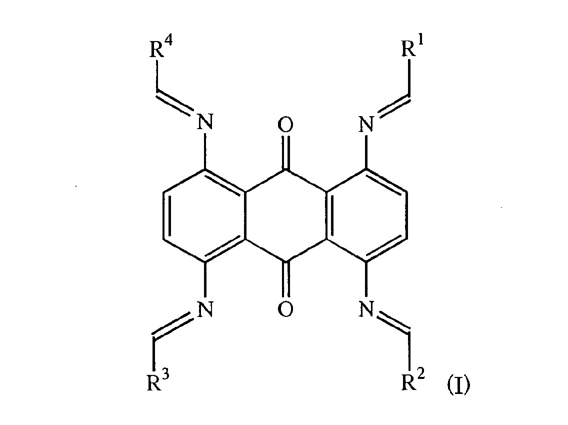 wherein R¹, R², R³ and R⁴ independently are aryl or aromatic heterocyclic; and wherein the dye has an absorption maximum in the range from 710 nm to 900 nm.

## Description

### Background

This invention relates generally to a method for marking petroleum hydrocarbons with anthraquinone imines for subsequent identification.

U.S. Pat. No. 4,755,012 discloses a ray absorption filter comprising a 1,4,5,8-tetra(arylamino)anthraquinone. This reference, however, does not suggest either a method for marking petroleum hydrocarbons, or the compounds used in the method of the present invention.

Phthalocyanine dyes having absorption maxima above 700 nm are known as petroleum markers, but these materials suffer from disadvantages, including difficulty of preparation and high cost. The problem addressed by this invention is to find an improved method for marking petroleum hydrocarbons with compounds having an absorption maximum above 700 nm.

### Statement of Invention

The present invention is directed to a method for invisibly marking a liquid petroleum hydrocarbon. The method comprises adding to the liquid petroleum hydrocarbon at least one dye having formula (I) 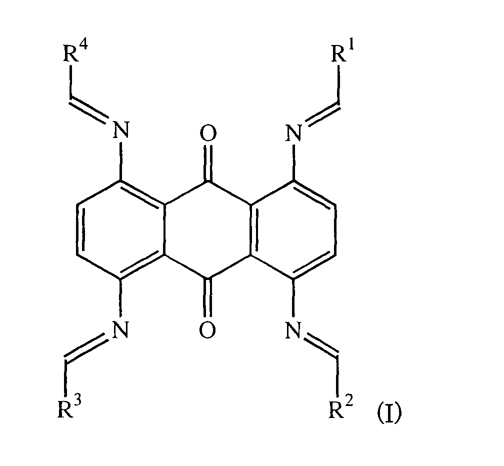 wherein R¹, R², R³ and R⁴ independently are aryl or aromatic heterocyclic; and wherein the dye has an absorption maximum in the range from 710 nm to 900 nm.

### Detailed Description

All percentages are weight percentages, unless otherwise indicated. Concentrations in parts per million ("ppm") are calculated on a weight/volume basis. The term "petroleum hydrocarbons" refers to products having a predominantly hydrocarbon composition, although they may contain minor amounts of oxygen, nitrogen, sulfur or phosphorus, that are derived from petroleum refining processes, preferably lubricating oil, hydraulic fluid, brake fluid, gasoline, diesel fuel, kerosene, jet fuel and heating oil. An "alkyl" group is a hydrocarbyl group having from one to twenty carbon atoms in a linear, branched or cyclic arrangement. Alkyl groups optionally have one or more double or triple bonds. Substitution on alkyl groups of one or more halo, hydroxy or alkoxy groups is permitted; alkoxy groups may in turn be substituted by one or more halo substituents. Preferably, alkyl groups have no halo or alkoxy substituents. A "heteroalkyl" group is an alkyl group having at least one carbon that has been replaced by O, NR, or S, wherein R is hydrogen, alkyl, aryl or aralkyl. An "aryl" group is a substituent derived from an aromatic hydrocarbon compound. An aryl group has a total of from six to twenty ring atoms, and has one or more rings which are separate or fused. An "aralkyl" group is an "alkyl" group substituted by an "aryl" group. A "heterocyclic" group is a substituent derived from a heterocyclic compound having from five to twenty ring atoms, at least one of which is nitrogen, oxygen or sulfur. Preferably, heterocyclic groups do not contain sulfur. Substitution on aryl or heterocyclic groups of one or more halo, cyano, nitro, dialkylamino, alkylamino, amino, hydroxy, alkyl, heteroalkyl, alkanoyl, alkanoyloxy, aroyl, aryloxy, aralkyloxy or alkoxy groups is permitted. Preferably, aryl and heterocyclic groups do not contain halogen atoms. An "aromatic heterocyclic" group is a heterocyclic group derived from an aromatic heterocyclic compound.

In a preferred embodiment of the invention, R¹, R², R³ and R⁴ are the same aryl or aromatic heterocyclic group. Preferably, R¹, R², R³ and R⁴ are aryl; more preferably R¹, R², R³ and R⁴ are phenyl or substituted phenyl; and most preferably phenyl or phenyl substituted by one or more of hydroxy, alkyl, alkanoyl, aroyl, aryloxy, aralkyloxy and alkoxy. In one preferred embodiment, R¹, R², R³ and R⁴ are phenyl substituted by at least one alkyl group, preferably an alkyl group having at least four carbon atoms, more preferably a saturated, unsubstituted alkyl group.

Compounds of formula (I) can be prepared by the condensation reaction of 1,4,5,8-tetraaminoanthraquinone and an aryl aldehyde or aromatic heterocyclic aldehyde, as shown below in Scheme 1. 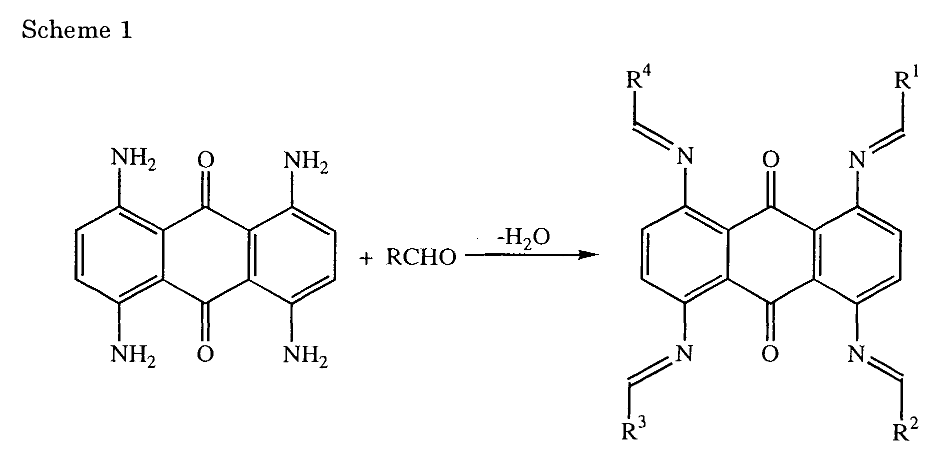 R represents an aryl or aromatic heterocyclic group. Optionally, more than one aryl or aromatic heterocyclic aldehyde is used, producing a mixture of compounds as a product. Standard conditions known to those skilled in the art are used for removal of water formed during the condensation reaction.

Preferably the amount of each dye of formula (I) added to the petroleum hydrocarbon is at least 0.01 ppm, more preferably at least 0.02 ppm, and most preferably at least 0.03 ppm. Preferably the amount of each dye is less than 10 ppm, more preferably less than 5 ppm, more preferably less than 2 ppm, and most preferably less than 1 ppm. Preferably, the marking is invisible, i.e., the dye cannot be detected by simple visual observation of the marked hydrocarbon. Preferably, a dye of formula (I) has an absorption maximum at a wavelength of at least 720 nm, more preferably at least 730 nm, and most preferably at least 750 nm; preferably, the absorption maximum is no greater than 880 nm, more preferably no greater than 860 nm. In one embodiment, at least one other dye having an absorption maximum at a different wavelength in the range from 710 nm to 900 nm is added to the petroleum hydrocarbon. Preferably, each of the other dyes is present in an amount of at least 0.01 ppm, more preferably at least 0.02 ppm, and most preferably at least 0.03 ppm. Preferably the amount of each other dye is less than 10 ppm, more preferably less than 5 ppm, more preferably less than 2 ppm, and most preferably less than 1 ppm. Preferably, the dyes are detected by exposing the marked hydrocarbon to electromagnetic radiation having wavelengths in the portion of the spectrum containing the absorption maxima of the dyes and detecting the absorption of light or fluorescent emissions. It is preferred that the detection equipment is capable of calculating dye concentrations and concentration ratios in a marked hydrocarbon. Typical spectrophotometers known in the art are capable of detecting the dyes used in the method of this invention when they are present at a level of at least 0.01 ppm. It is preferred to use the detectors described in U.S. Pat. No. 5,225,679, especially the SpecTrace™ analyzer available from Rohm and Haas Company, Philadelphia, PA. These analyzers use a filter selected based on the absorption spectrum of the dye, and use chemometric analysis of the signal by multiple linear regression methods to reduce the signal-to-noise ratio.

When the detection method does not involve performing any chemical manipulation of the marked petroleum hydrocarbon, the sample may be returned to its source after testing, eliminating the need for handling and disposal of hazardous chemicals. This is the case, for example, when the dyes are detected simply by measuring light absorption by a sample of the marked petroleum hydrocarbon.

In one embodiment of the invention, the dye is formulated in a solvent to facilitate its addition to the liquid petroleum hydrocarbon. The preferred solvents for anthraquinone imines are N-methylpyrrolidinone, N,N-dimethyl propylene urea, nitrobenzene, toluene and N,N-dimethylformamide. Preferably, the dye is present in the solvent at a concentration of from 0.1% to 10%.

In one embodiment of the invention, at least one dye having formula (I), and optionally another dye having an absorption maximum from 710 nm to 900 nm, is added to a petroleum hydrocarbon with at least one visible dye; i.e., a dye having an absorption maximum in the range from 500 nm to 700 nm, preferably from 550 nm to 700 nm, and most preferably from 550 nm to 680 nm. Preferably, each visible dye is added in an amount of at least 0.1 ppm, preferably at least 0.2 ppm, and most preferably at least 0.5 ppm. Preferably, the amount of each visible dye is no more than 10 ppm, more preferably no more than 5 ppm, more preferably no more than 3 ppm, and most preferably no more than 2 ppm. In a preferred embodiment, the visible dyes are selected from the classes of anthraquinone dyes and azo dyes. Suitable anthraquinone dyes having an absorption maximum in this region include, for example, 1,4-disubstituted anthraquinones having alkylamino, arylamino or aromatic-heterocyclic-amino substituents. Suitable azo dyes having an absorption maximum in this region include the bisazo dyes, for example, those having the structure Ar-N=N-Ar-N=N-Ar, in which Ar is an aryl group, and each Ar may be different. Specific examples of suitable commercial anthraquinone and bisazo dyes having an absorption maximum in this region are listed in the Colour Index, including C.I. Solvent Blue 98, C.I. Solvent Blue 79, C.I. Solvent Blue 99 and C.I. Solvent Blue 100.

Incorporation of at least one dye having an absorption maximum in the region from 710 nm to 900 nm allows identification of the liquid hydrocarbon by spectrophotometric means in a spectral region relatively free of interference. Low levels of these dyes are detectable in this region, allowing for a cost-effective marking process, and availability of multiple dyes allows coding of information via the amounts and ratios of the dyes. For these reasons, additional compounds absorbing in this range, and suitable as fuel markers, are extremely useful.

Combinations of markers detectable at 710 nm to 900 nm with markers detectable in the visible range also are useful. Incorporation of higher levels of at least one visible dye having an absorption maximum in the region from 500 nm to 700 nm facilitates quantitative spectrophotometric determination in this region. Accurate determination of the dye levels allows the amounts and ratios of the dyes to serve as parts of a code identifying the hydrocarbon. Since dyes absorbing in this region often are less costly, use of a higher level will not greatly increase the overall cost of the marking process. Thus, the combination of the two kinds of dyes increases the flexibility and minimizes the cost of the marking process.

## Claims

1. A method for invisibly marking a liquid petroleum hydrocarbon; said method comprising adding to said liquid petroleum hydrocarbon at least one dye having formula (I) 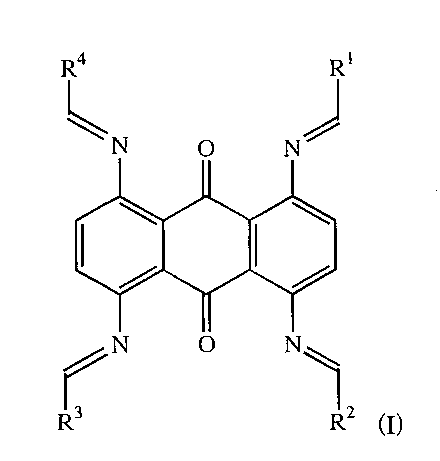 wherein R¹, R², R³ and R⁴ independently are aryl or aromatic heterocyclic; and wherein said at least one dye has an absorption maximum in the range from 710 nm to 900 nm.

2. The method of claim 1 in which the liquid petroleum hydrocarbon is selected from the group consisting of lubricating oil, hydraulic fluid, brake fluid, gasoline, diesel fuel, kerosene, jet fuel and heating oil.

3. The method of claim 1 in which R¹, R², R³ and R⁴ are the same aryl or aromatic heterocyclic group.

4. The method of claim 3 in which R¹, R², R³ and R⁴ are phenyl or substituted phenyl.

5. The method of claim 1 in which each dye is present in an amount from 0.01 ppm to 5 ppm.

6. The method of claim 5 in which said dye having formula (I) has an absorption maximum in the range from 750 nm to 900 nm.

7. The method of claim 6 further comprising at least one visible dye in an amount from 0.1 ppm to 2 ppm.

8. The method of claim 7 in which each dye having formula (I) is present in an amount from 0.01 ppm to 2 ppm, and each visible dye is present in an amount from 0.2 ppm to 2 ppm.

9. The method of claim 8 in which R¹, R², R³ and R⁴ are phenyl or substituted phenyl.

10. The method of claim 9 in which the liquid petroleum hydrocarbon is selected from the group consisting of lubricating oil, hydraulic fluid, brake fluid, gasoline, diesel fuel, kerosene, jet fuel and heating oil.
